# FASCICULE DE BREVET EUROPEEN

(11) **EP 3 587 767 B1**
(45) Date de publication et mention de la délivrance du brevet: **24.11.2021**
(21) Numéro de dépôt: 19182916.7
(22) Date de dépôt: 27.06.2019
(51) Int. Cl.: F02C 7/05, B64D 33/02

(54) **STRUCTURE D'ENTREE D'AIR POUR UNE NACELLE D'AERONEF COMPORTANT UN ELEMENT AMORTISSEUR DE CHOCS**
LUFTEINLASSSTRUKTUR FÜR LUFTFAHRZEUGGONDEL, DIE EIN STOSSDÄMPFUNGSELEMENT UMFASST
AIR INTAKE STRUCTURE FOR AN AIRCRAFT NACELLE COMPRISING A SHOCK-ABSORBING ELEMENT

(30) Priorité: 29.06.2018 FR 1855967
(43) Date de publication de la demande: 01.01.2020
(73) Titulaire: AIRBUS OPERATIONS (S.A.S.), 31060 Toulouse (FR)
(72) Inventeur: BOURHIS, Arnaud, 31060 TOULOUSE Cedex 9 (FR); PORTE, Alain, 31060 TOULOUSE Cedex 9 (FR); PONS, François, 31060 TOULOUSE Cedex 9 (FR)
(74) Mandataire: Gicquel, Olivier Yves Gérard

(56) Documents cités:
- EP-A1- 2 535 271
- WO-A2-2010/086560
- FR-A1- 2 925 463

## Description

### DOMAINE TECHNIQUE

La présente invention concerne une structure d'entrée d'air pour une nacelle d'aéronef où la structure d'entrée d'air comporte un élément amortisseur de chocs, une nacelle d'aéronef comportant une telle structure d'entrée, ainsi qu'un aéronef comportant au moins une telle nacelle.

### ETAT DE LA TECHNIQUE ANTERIEURE

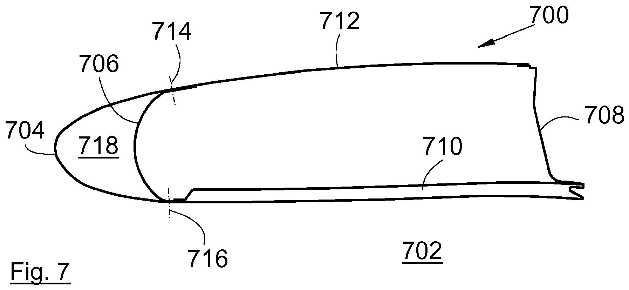

Un moteur d'aéronef comprend une nacelle dans laquelle est logé le moteur proprement dit. La nacelle qui prend une forme annulaire présente à l'avant une structure d'entrée d'air 700 dont une coupe est représentée sur la Fig. 7.

La structure d'entrée d'air 700 a notamment pour fonction d'assurer l'écoulement aérodynamique de l'air, d'une part, vers le canal de soufflante 702 et, d'autre part, vers l'extérieur de la nacelle.

La structure d'entrée d'air 700 comprend une lèvre d'entrée d'air 704, un cadre de renfort avant 706, un cadre de renfort arrière 708, un panneau acoustique 710 et un panneau extérieur 712.

La lèvre d'entrée d'air 704 présente en section la forme d'un U ouvert vers l'arrière. Elle forme l'enveloppe extérieure de la partie avant de la structure d'entrée d'air 700 et elle assure le partage de l'air entre la partie qui pénètre dans le canal de soufflante 706 et la partie qui s'écoule autour de la nacelle.

Le cadre de renfort avant 706 présente également en section la forme d'un U ouvert vers l'arrière et il est placé à l'intérieur et à l'arrière de la lèvre d'entrée d'air 704. Le cadre de renfort avant 706 assure la tenue mécanique de la partie avant de la nacelle et aide à en préserver la forme et le dimensionnement.

Le panneau extérieur 712 prolonge la lèvre d'entrée d'air 704 du côté extérieur et constitue une face extérieure en contact avec l'air extérieur.

Le panneau acoustique 710 forme une enveloppe intérieure de la nacelle et délimite une veine 702 qui constitue le canal de soufflante. Le panneau acoustique 710 est disposé en arrière de la lèvre d'entrée d'air 704, du côté du canal de soufflante 702.

Le panneau acoustique 710 présente une structure propre à atténuer les bruits produits par le moteur et notamment par la soufflante.

Généralement, l'espace 718 compris entre la lèvre d'entrée d'air 704 et le cadre de renfort avant 706, est mis sous pression avec de l'air chaud pour dégivrer la lèvre d'entrée d'air 704.

Le cadre de renfort avant 706 et la lèvre d'entrée d'air 704 sont fixés au niveau d'une zone de fixation extérieure 714.

Le cadre de renfort avant 706 et la lèvre d'entrée d'air 704 sont fixés au niveau d'une zone de fixation intérieure 716.

Bien qu'une telle structure d'entrée d'air 700 donne entière satisfaction lors de son utilisation, il peut arriver qu'au cours d'un vol de l'aéronef, un oiseau heurte la lèvre d'entrée d'air 704. La lèvre d'entrée d'air 704 peut alors être percée et l'oiseau est arrêté par le cadre de renfort avant 706, Dans des cas très rares, il peut arriver que l'oiseau perce également le cadre de renfort avant 706 au risque de déformer également le cadre de renfort arrière 708.

En outre, les zones de fixation 714 et 716 pour le cadre de renfort avant 706 créent des perturbations aérodynamiques.

Le document EP2535271 divulgue une structure connue équipée d'un élément amortisseur de chocs sous la forme d'une peau collée au système de dégivrage.

### EXPOSE DE L'INVENTION

Un objet de la présente invention est de proposer une structure d'entrée d'air qui comporte un élément amortisseur de chocs limitant l'impact d'un oiseau traversant la lèvre d'entrée d'air.

A cet effet, est proposée une structure d'entrée d'air pour une nacelle d'un aéronef, ladite structure d'entrée d'air comportant :
- une lèvre d'entrée d'air à section en forme de U ouvert vers l'arrière,
- un panneau acoustique qui prolonge la lèvre d'entrée d'air vers l'arrière et sur un côté intérieur,
- un panneau extérieur qui prolonge la lèvre d'entrée d'air vers l'arrière et sur un côté extérieur, et
- un cadre de renfort arrière fixé entre le panneau extérieur et le panneau acoustique, où le cadre de renfort arrière délimite en partie un volume intérieur qui est juste devant le cadre de renfort arrière,
- un élément amortisseur de chocs positionné dans le volume intérieur où l'élément amortisseur de chocs prend la forme d'une structure déformable lors d'un choc et qui est rempli au moins partiellement d'un fluide,

la structure d'entrée d'air (150) étant caractérisée en ce que l'élément amortisseur de chocs (170) est une enveloppe souple (174) remplie d'un gaz sous pression.

La mise en place d'un élément amortisseur de chocs à l'avant du cadre de renfort arrière limite l'impact d'un corps sur ce cadre de renfort arrière lorsque ledit corps pénètre dans la structure d'entrée d'air.

Selon un mode de réalisation particulier, l'enveloppe souple remplit le volume intérieur.

Selon un autre mode de réalisation particulier, l'enveloppe souple remplit partiellement le volume intérieur.

Avantageusement, l'enveloppe souple prend la forme d'un tore plaqué et fixé contre le cadre de renfort arrière.

Avantageusement, la structure d'entrée d'air comporte un cadre avant dont la section prend la forme d'un U ouvert vers l'arrière et placé à l'intérieur et à l'arrière de la lèvre d'entrée d'air et l'élément amortisseur de chocs est disposé entre le cadre avant et le cadre de renfort arrière.

La structure de l'entrée d'air est également caractérisée en ce que l'enveloppe souple est équipée d'un moyen d'évacuation qui est destiné à évacuer le gaz de l'enveloppe souple lorsque la pression dans l'enveloppe souple dépasse un seuil.

L'invention propose également une nacelle pour un moteur d'aéronef et présentant une structure d'entrée d'air selon l'une des variantes précédentes.

L'invention propose également un aéronef comportant au moins une nacelle selon la variante précédente.

Un autre objet de l'invention est d'offrir un élément amortisseur de chocs sous la forme d'un bloc de mousse constitué d'alvéoles remplie de fluide.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant une structure d'entrée d'air selon l'invention,
la Fig. 2 est une vue en coupe d'une structure d'entrée d'air selon un premier mode de réalisation de l'invention,
la Fig. 3 est une vue similaire à la Fig. 2 lors de la pénétration d'un corps dans la structure d'entrée d'air suite à un choc,
la Fig. 4 est une vue en coupe d'une structure d'entrée d'air selon un exemple non revendiqué.
la Fig. 5 est une vue en coupe d'une structure d'entrée d'air selon un deuxième mode de réalisation de l'invention,
la Fig. 6 est une vue en coupe d'une structure d'entrée d'air selon un troisième mode de réalisation de l'invention, et
la Fig. 7 est une vue en coupe d'une structure d'entrée d'air de l'état de la technique.

### EXPOSE DETAILLE DE MODES DE REALISATION

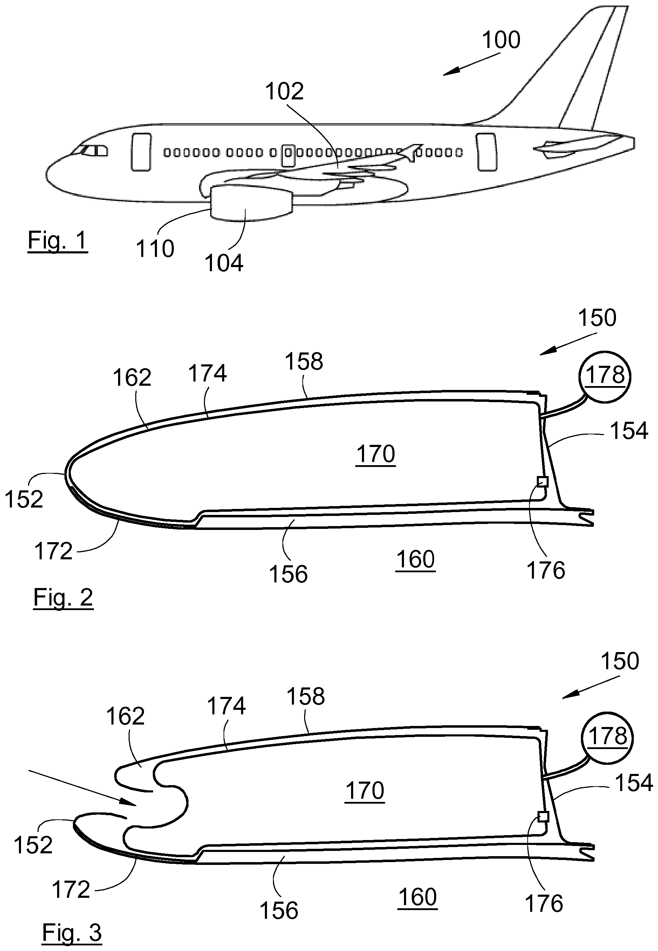

La Fig. 1 montre un aéronef 100 qui présente une aile 102 et sous l'aile une nacelle 104 dans laquelle est logé un moteur.

Par convention, les termes "avant" et "arrière" sont utilisés dans l'ensemble du texte en prenant pour référence l'avant et l'arrière du moteur, ce qui correspond également à l'avant et à l'arrière de l'aéronef 100.

L'avant de la nacelle 104 présente une structure d'entrée d'air 110 selon l'invention.

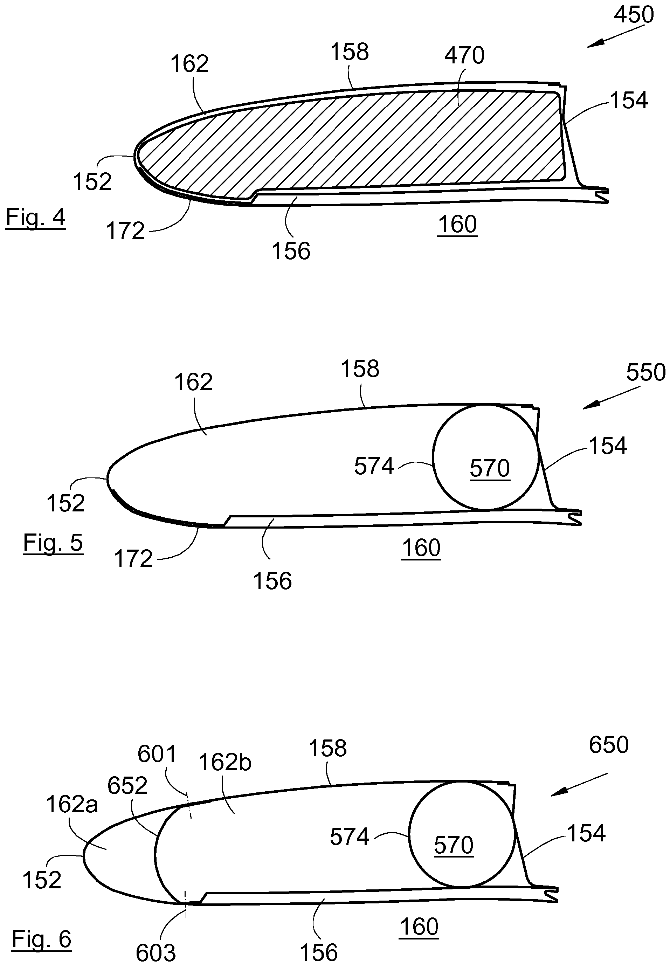

La Fig. 2 et la Fig. 3 montrent une coupe d'une structure d'entrée d'air 150 selon un premier mode de réalisation de l'invention. La Fig. 4 montre une coupe de la structure d'entrée d'air 450 selon un exemple non revendiqué. La Fig. 5 montre une coupe de la structure d'entrée d'air 550 selon un deuxième mode de réalisation de l'invention. La Fig. 6 montre une coupe de la structure d'entrée d'air 650 selon un troisième mode de réalisation de l'invention.

La structure générale de la structure d'entrée d'air 110, 150, 450, 550, 650 selon l'invention est similaire à la structure d'entrée d'air de l'état de la technique. La structure d'entrée d'air 110, 150, 450, 550, 650 selon l'invention comprend une lèvre d'entrée d'air 152, un cadre de renfort arrière 154, un panneau acoustique 156 et un panneau extérieur 158.

La lèvre d'entrée d'air 152 présente en section la forme d'un U ouvert vers l'arrière, forme l'enveloppe extérieure de la partie avant de la structure d'entrée d'air 150, 450, 550, 650 et assure le partage de l'air entre l'air qui s'écoule vers l'extérieur de la nacelle 104 et l'air qui s'écoule vers l'intérieur de la nacelle 104.

Le panneau extérieur 158 prolonge la lèvre d'entrée d'air 152 vers l'arrière et du côté extérieur et constitue une face extérieure globalement cylindrique en contact avec l'air extérieur.

Le panneau acoustique 156 forme une enveloppe intérieure globalement cylindrique de la nacelle 104 et délimite une veine 160 qui constitue un canal de soufflante. Le panneau acoustique 156 prolonge la lèvre d'entrée d'air 152 vers l'arrière et du côté intérieur, c'est-à-dire du côté du canal de soufflante 160.

Dans le cadre des premier et deuxième modes de réalisation de l'invention et de l'exemple non revendiqué de la figure 4, la lèvre d'entrée d'air 152, le panneau extérieur 158, le panneau acoustique 156 et le cadre de renfort arrière 154 sont fixés les uns aux autres et délimitent un volume intérieur 162 de la structure d'entrée d'air 150, 450, 550. Le cadre de renfort arrière 154 est fixé entre le panneau extérieur 158 et le panneau acoustique 156 et se positionne à l'arrière de la structure d'entrée d'air 150, 450, 550, 650.

En outre, dans ces modes de réalisation, il n'y a pas de cadre de renfort avant, et il n'y a donc plus de zones de fixation de celui-ci avec la lèvre d'entrée d'air d'où une amélioration du profil aérodynamique.

Dans le cadre du troisième mode de réalisation, la structure d'entrée d'air 650 comporte également un cadre avant 652 qui présente en section la forme d'un U ouvert vers l'arrière et il est placé à l'intérieur et à l'arrière de la lèvre d'entrée d'air 152. La lèvre d'entrée d'air 152, le panneau extérieur 158, le panneau acoustique 156, le cadre avant 652 et le cadre de renfort arrière 154 sont fixés les uns aux autres et délimitent un volume intérieur avant 162a et un volume intérieur arrière 162b. Le volume intérieur avant 162a est délimité entre la lèvre d'entrée d'air 152 et le cadre avant 652 et le volume intérieur arrière 162b est délimité entre le cadre avant 652, le panneau extérieur 158, le panneau acoustique 156 et le cadre de renfort arrière 154. Dans ce cas, le cadre avant 652 et la lèvre d'entrée d'air 152 sont fixés au niveau d'une zone de fixation extérieure 601 et une zone de fixation intérieure 603.

Dans chacun des modes de réalisation de l'invention et de l'exemple non revendiqué de la figure 4, la structure d'entrée d'air 150, 450, 550, 650 comporte un élément amortisseur de chocs 170, 470, 570 qui se positionne dans le volume intérieur 162, 162b qui est juste devant le cadre de renfort arrière 154, c'est-à-dire qui est délimité en partie par le cadre de renfort arrière 154. L'élément amortisseur de chocs 170, 470, 570 prend la forme d'une structure déformable qui se déforme lors d'un choc.

La structure déformable est remplie au moins partiellement d'un fluide sous forme liquide ou gazeux.

Dans le cadre de l'exemple non revendiqué de la figure 4 et des premier et deuxième modes de réalisation de l'invention, le dégivrage de la lèvre d'entrée d'air 152 est assuré par un système électrique 172 qui est positionné contre la paroi de la lèvre d'entrée d'air 152 et qui est alimenté électriquement par un générateur électrique de l'aéronef 100.

Dans le cadre du troisième mode de réalisation, le dégivrage de la lèvre d'entrée d'air 152 est assuré de la même manière que dans le cas de l'état de la technique, c'est-à-dire par mise sous pression avec de l'air chaud dans le volume intérieur avant 162a.

Dans le premier mode de réalisation de l'invention, l'élément amortisseur de chocs 170 est une enveloppe souple 174 remplie d'un gaz sous pression, comme par exemple l'hélium, le propergol, ou l'argon. L'enveloppe souple 174 remplit le volume intérieur 162. Lorsqu'un oiseau heurte la lèvre d'entrée d'air 152 (Fig. 3) et la transperce, l'oiseau est arrêté dans sa progression par l'enveloppe souple 174 qui se déforme et absorbe le choc avant que l'énergie soit transmise au cadre de renfort arrière 154 et le déforme.

Pour permettre un dégonflement de l'enveloppe souple 174 sous le choc, celle-ci est équipée d'un moyen d'évacuation 176 qui permet d'évacuer le gaz de l'enveloppe souple 174 lorsque la pression dans l'enveloppe souple 174 dépasse un seuil. Le moyen d'évacuation 176 prend par exemple la forme d'une valve, d'un évent, ou d'une membrane poreuse. La valeur du seuil est déterminée par rapport à la surpression engendrée par un choc avec un oiseau.

Lors d'une opération de maintenance, il est possible de connecter une pompe 178 afin de vérifier la pression à l'intérieur de l'enveloppe souple 174 et si nécessaire la regonfler.

Pour réguler la pression à l'intérieur de l'enveloppe souple 174, la structure d'entrée d'air 150 comporte une pompe 178 qui permet d'alimenter l'enveloppe souple 174 en gaz sous pression. Ainsi, lors des phases de décollage et atterrissage, durant lesquelles le risque d'un choc avec un oiseau est le plus important, l'enveloppe souple 174 est gonflée à une pression plus importante permettant de résister au choc.

En vol, la pression et la température entraînent une augmentation du volume de l'enveloppe souple 174. Cette augmentation est maîtrisée grâce au matériau de l'enveloppe souple 174 et au gaz choisi. L'augmentation est calculée afin de permettre à l'enveloppe souple 174 de se gonfler suffisamment pour soutenir le profil aérodynamique de la structure d'entrée d'air 150 afin d'en améliorer la laminarité. L'enveloppe souple 174 est réalisée par exemple en PA (polyamide) ou en PET (poly(téréphtalate d'éthylène)) ou tout autre matériaux approprié.

Dans la mesure où l'enveloppe souple 174 remplit le volume intérieur 162, il n'est pas nécessaire de la fixer, mais il est possible de la fixer à la lèvre d'entrée d'air 152, au panneau acoustique 156, au panneau extérieur 158 ou au cadre de renfort arrière 154.

Dans l'exemple non revendiqué de la figure 4, l'élément amortisseur de chocs 470 est un bloc de mousse constitué d'alvéoles remplies dudit fluide et lorsqu'un oiseau heurte la lèvre d'entrée d'air 152 et la transperce, l'oiseau est arrêté dans sa progression par le bloc de mousse qui se déforme et absorbe le choc.

Dans le deuxième et troisième modes de réalisation de l'invention, l'élément amortisseur de chocs 570 est également une enveloppe souple 574 remplie d'un gaz sous pression.

L'enveloppe souple 574 ne remplit pas entièrement le volume intérieur 162, 162b, c'est-à-dire qu'elle remplit partiellement le volume intérieur 162, 162b. L'enveloppe souple 574 reste plaquée et fixée contre le cadre de renfort arrière 154. L'enveloppe souple 574 peut prendre la forme d'un tore.

Dans le troisième mode de réalisation de l'invention, l'élément amortisseur de chocs 570 est disposé entre le cadre avant 652 et le cadre de renfort arrière 154.

Dans le deuxième et troisième modes de réalisation de l'invention, l'enveloppe souple peut également être équipée d'un moyen d'évacuation qui permet d'évacuer le gaz de l'enveloppe souple 574 lorsque la pression dans l'enveloppe souple 574 dépasse un seuil.

Dans tous les modes de réalisation et l'exemple non revendiqué de la figure 4, la transmission des efforts de l'élément amortisseur de chocs 170, 470, 570 au panneau extérieur 158, au panneau acoustique 156 et au cadre de renfort arrière 154 en cas de chocs s'effectue de manière différente en fonction de la position de l'élément amortisseur de chocs 170, 470, 570 par rapport à ces éléments.

Si la distance entre l'élément amortisseur de chocs 170, 470 et le panneau extérieur 158, d'une part, et la distance entre l'élément amortisseur de chocs 170, 470 et le panneau acoustique 156, d'autre part, sont relativement importantes par rapport à la distance entre l'élément amortisseur de chocs 170, 470 et le cadre de renfort arrière 154, les efforts seront transmis au cadre de renfort arrière 154 qui est alors dimensionné en conséquence.

Si la distance entre l'élément amortisseur de chocs 170, 470 et le panneau extérieur 158, d'une part, et la distance entre l'élément amortisseur de chocs 170, 470 et le panneau acoustique 156, d'autre part, sont relativement faibles par rapport à la distance entre l'élément amortisseur de chocs 170, 470 et le cadre de renfort arrière 154, les efforts seront transmis au panneau extérieur 158 et au panneau acoustique 156 sur toute la circonférence dudit élément amortisseur de chocs 170, 470.

## Revendications

1. Structure d'entrée d'air (110, 150) pour une nacelle (104) d'un aéronef (100), ladite structure d'entrée d'air (110, 150) comportant :
- une lèvre d'entrée d'air (152) à section en forme de U ouvert vers l'arrière,
- un panneau acoustique (156) qui prolonge la lèvre d'entrée d'air (152) vers l'arrière et sur un côté intérieur,
- un panneau extérieur (158) qui prolonge la lèvre d'entrée d'air (152) vers l'arrière et sur un côté extérieur,
- un cadre de renfort arrière (154) fixé entre le panneau extérieur (158) et le panneau acoustique (156), où le cadre de renfort arrière (154) délimite en partie un volume intérieur (162) qui est juste devant le cadre de renfort arrière (154), et
- un élément amortisseur de chocs (170) positionné dans le volume intérieur (162) où l'élément amortisseur de chocs (170) prend la forme d'une structure déformable lors d'un choc et est remplie au moins partiellement d'un fluide,
la structure d'entrée d'air (150) étant **caractérisée en ce que** l'élément amortisseur de chocs (170) est une enveloppe souple (174) remplie d'un gaz sous pression, l'enveloppe souple (174) étant équipée d'un moyen d'évacuation (176) qui est destiné à évacuer le gaz de l'enveloppe souple (174) lorsque la pression dans l'enveloppe souple (174) dépasse un seuil.

2. Structure d'entrée d'air (150) selon la revendication 1, **caractérisée en ce que** l'enveloppe souple (174) remplit le volume intérieur (162).

3. Structure d'entrée d'air (550, 650) selon la revendication 1, **caractérisée en ce que** l'enveloppe souple (574) remplit partiellement le volume intérieur (162, 162b).

4. Structure d'entrée d'air (550, 650) selon la revendication 3, **caractérisée en ce que** l'enveloppe souple (574) prend la forme d'un tore plaqué et fixé contre le cadre de renfort arrière (154).

5. Structure d'entrée d'air (650) selon la revendication 4, **caractérisée en ce qu'**elle comporte un cadre avant (652) dont la section prend la forme d'un U ouvert vers l'arrière et placé à l'intérieur et à l'arrière de la lèvre d'entrée d'air (152) et **en ce que** l'élément amortisseur de chocs (570) est disposé entre le cadre avant (652) et le cadre de renfort arrière (154).

6. Nacelle (104) pour un moteur d'aéronef (100) et présentant une structure d'entrée d'air selon l'une des revendications précédentes.

7. Aéronef (100) comportant au moins une nacelle (104) selon la revendication précédente.

## Patentansprüche

1. Lufteinlassstruktur (110, 150) für eine Gondel (104) eines Luftfahrzeugs (100), wobei die Lufteinlassstruktur (110, 150) Folgendes aufweist:
- eine Lufteinlasslippe (152) mit einem nach hinten offenen U-förmigen Querschnitt,
- eine Akustikplatte (156), die die Lufteinlasslippe (152) nach hinten und auf einer Innenseite verlängert,
- eine Außenplatte (158), die die Lufteinlasslippe (152) nach hinten und auf einer Außenseite verlängert,
- einen hinteren Verstärkungsrahmen (154) der zwischen der Außenplatte (158) und der Akustikplatte (156) befestigt ist, wobei der hintere Verstärkungsrahmen (154) unmittelbar vor dem hinteren Verstärkungsrahmen (154) befindliches ein Innenvolumen (162) teilweise begrenzt, und
- ein Stoßdämpferelement (170), das im Innenvolumen (162) positioniert ist, wobei das Stoßdämpferelement (170) die Form einer bei einem Stoß verformbaren Struktur aufweist und zumindest teilweise mit einem Fluid gefüllt,
wobei die Lufteinlassstruktur (150) **dadurch gekennzeichnet ist, dass** das Stoßdämpferelement (170) eine flexible Hülle (174) ist, die mit einem unter Druck stehenden Gas gefüllt ist, wobei die flexible Hülle (174) mit einem Ablassmittel (176) ausgestattet ist, das dazu bestimmt ist, das Gas aus der flexiblen Hülle (174) abzulassen, wenn der Druck in der flexiblen Hülle (174) einen Schwellenwert überschreitet.

2. Lufteinlassstruktur (150) nach Anspruch 1, **dadurch gekennzeichnet, dass** die flexible Hülle (174) das Innenvolumen (162) ausfüllt.

3. Lufteinlassstruktur (550, 650) nach Anspruch 1, **dadurch gekennzeichnet, dass** die flexible Hülle (574) das Innenvolumen (162, 162b) teilweise ausfüllt.

4. Lufteinlassstruktur (550, 650) nach Anspruch 3, **dadurch gekennzeichnet, dass** die flexible Hülle (574) die Form eines Torus aufweist, der gegen den hinteren Verstärkungsrahmen (154) gedrückt und an diesem befestigt ist.

5. Lufteinlassstruktur (650) nach Anspruch 4, **dadurch gekennzeichnet, dass** sie einen vorderen Rahmen (652) mit einem nach hinten offenen U-förmigen Querschnitt aufweist, der hinter der Lufteinlasslippe (152) angeordnet ist, und dass das Stoßdämpferelement (570) zwischen dem vorderen Rahmen (652) und dem hinteren Verstärkungsrahmen (154) angeordnet ist.

6. Gondel (104) für einen Luftfahrzeugmotor (100) und mit einer Lufteinlassstruktur nach einem der vorangehenden Ansprüche.

7. Luftfahrzeug (100) mit zumindest einer Gondel (104) nach dem vorangehenden Anspruch.

## Claims

1. Air-intake structure (110, 150) for a nacelle (104) of an aircraft (100), said air-intake structure (110, 150) having:
- an air-intake lip (152) with a cross section in the shape of a U open towards the rear,
- an acoustic panel (156), which continues the air-intake lip (152) towards the rear and on an inner side,
- an outer panel (158), which continues the air-intake lip (152) towards the rear and on an outer side,
- a rear reinforcing frame (154) secured between the outer panel (158) and the acoustic panel (156), wherein the rear reinforcing frame (154) partially delimits an internal volume (162) which is just in front of the rear reinforcing frame (154), and
- an impact-absorbing element (170) positioned in the internal volume (162), wherein the impact-absorbing element (170) is in the form of a structure able to deform in the event of an impact and is at least partially filled with a fluid,
the air-intake structure (150) being **characterized in that** the impact-absorbing element (170) is a flexible envelope (174) filled with a pressurized gas, the flexible envelope (174) being fitted with a discharging means (176), which is intended to discharge the gas in the flexible envelope (174) when the pressure in the flexible envelope (174) exceeds a threshold.

2. Air-intake structure (150) according to Claim 1, **characterized in that** the flexible envelope (174) fills the internal volume (162).

3. Air-intake structure (550, 650) according to Claim 1, **characterized in that** the flexible envelope (574) partially fills the internal volume (162, 162b).

4. Air-intake structure (550, 650) according to Claim 3, **characterized in that** the flexible envelope (574) is in the form of a torus that is pressed and secured against the rear reinforcing frame (154).

5. Air-intake structure (650) according to Claim 4, **characterized in that** it has a front frame (652), which has a cross section having the shape of a U open towards the rear and which is positioned on the inside of and behind the air-intake lip (152), and **in that** the shock-absorbing element (570) is disposed between the front frame (652) and the rear reinforcing frame (154).

6. Nacelle (104) for an engine of an aircraft (100), having an air-intake structure according to one of the preceding claims.

7. Aircraft (100) having at least one nacelle (104) according to the preceding claim.
